# EUROPEAN PATENT SPECIFICATION

(11) **EP 3 524 079 B1**
(45) Date of publication and mention of the grant of the patent: **07.10.2020**
(21) Application number: 19153978.2
(22) Date of filing: 28.01.2019
(51) Int. Cl.: A43B 5/04, A43B 17/00, A43B 17/06, B29D 35/12

(54) **INNER SOLE FOR A SPORTS FOOTWEAR, IN PARTICULAR FOR A SKI BOOT**
EINLEGESOHLE FÜR SPORTSCHUHE, INSBESONDERE FÜR EINEN SKISCHUH
SEMELLE INTERIEURE POUR UNE CHAUSSURE DE SPORT, NOTAMMENT POUR UNE CHAUSSURE DE SKI

(30) Priority: 07.02.2018 IT 201800002477
(43) Date of publication of application: 14.08.2019
(73) Proprietor: Tecnica Group S.p.A., 31040 Giavera del Montello (TV) (IT)
(72) Inventor: BORDIN, Paolo, 31040 Giavera del Montello (TV) (IT); MOGNO, Alfio, 31040 Giavera del Montello (TV) (IT); ZAMPIERI, Claudio, 31040 Giavera del Montello (TV) (IT)
(74) Representative: Robba, Pierpaolo

(56) References cited:
- US-A1- 2016 066 648

## Description

### Technical Field of the Invention

The present invention relates to an inner sole for a sports footwear, such as a ski boot.

More particularly, the present invention relates to an inner sole for a sports footwear which allows to adjust the inner volume of the sports footwear, as well as the height and/or inclination of the user's foot relative to the surface on which the sports footwear rests.

### Prior Art

Using inner soles in association with sports footwear, especially with sports footwear of the kind comprising an outer rigid shell, such as for instance ski boots, is known from the art.

In general, the inner surface of the sole of the outer shell of such sports footwear is not smooth, but - on the contrary - it has a plurality of inwardly protruding ribs.

The main purpose of the aforesaid inner soles is to cover such ribs, so as to offer a smooth surface to the foot sole of the user, thus increasing his/her comfort.

Furthermore, in case of sports footwear intended to be used when practicing winter sports, said inner soles further have the function of thermally insulating the user's foot.

Finally, the shape and construction of the inner sole contribute to determine the volume inside the outer shell of the sports footwear and, more particularly, the height and inclination of the user's foot relative to the surface on which the sports footwear rests.

In this respect, it is possible to replace an inner sole with another inner sole having a different thickness and/or shape for customizing said inner volume and said height and/or inclination relative to the surface on which the sports footwear rests.

US 2016/066648 discloses an inner insole which comprises a base body provided with protrusions and a separate insert which is provided with corresponding through openings. The insert can be coupled to the base body to obtain a smooth surface, or it can be separated from it to maintain the protrusions of the base body. In any case, the overall thickness of the inner sole is always the same, it is defined by the height of the protrusions of the base body and it is in no way modified by the presence / absence of the insert.

Moreover, there are inner soles the thickness and/or shape of which are adjustable to a certain degree.

WO 2005/070245 discloses an inner sole comprising a flat base body, on a first face of which a first plurality of ribs with a first height are provided, and on a second, opposite face of which a second plurality of ribs with a second height are provided: depending on which face of the base body is oriented towards the sole of the sports footwear and which face of the base body is oriented towards the user's foot, the height of the user's foot from the surface on which the sports footwear rests is varied.

Nevertheless, such a solution has a severe drawback, since, in both possible configurations, the inner sole face that is oriented towards the user's foot is provided with protruding ribs, which involve a relevant deterioration of the user's comfort.

US 4 765 070 discloses an inner sole comprising means for adjusting its thickness at one or more regions. More particularly, the inner sole disclosed in this document comprises a spacer which is connected to the inner sole body by means of a pivoting pin, so that it can pivot about an axis that is perpendicular to the plane on which the inner sole body lies and it can move from a position in which it is received inside a cavity provided on the lower face of the inner sole body and it does not contribute to the overall thickness of the inner sole, to a position in which it is outside said cavity and superimposed to the lower face of the inner sole body, so that its thickness adds to the thickness of the inner sole body for determining the overall thickness of the inner sole itself.

This solution, too, has several drawbacks.

First of all, since the spacer is superimposed to the inner sole face that is oriented towards the sole of the sports footwear, it has to be shaped so as to fit with the inner surface of said sole. Moreover, since the spacer is superimposed to the inner sole face that is on the opposite side with respect to the user's foot, it is almost impossible to use this spacer for an effective customization to the specific morphology of the user's foot.

Secondly, this solution is complex and scarcely reliable, as the presence of several parts and the clearances between said parts (e.g. in case the pin connecting the spacer to the inner sole body becomes loosened) are likely to lead to a wrong positioning or alignment of the spacer relative to the inner sole body.

The main object of the present invention is to overcome the aforesaid drawbacks of prior art by providing an inner sole which comprises means for modifying its overall thickness and/or shape and, at the same time, has a simple, reliable and strong construction.

Another object of the invention is to provide an inner sole of the aforesaid type which can be manufactured in a simple and cost-effective way, thus being suitable for a large scale industrial production.

These and other objects are achieved by an inner sole for a sports footwear as claimed in the appended claims.

### Summary of the Invention

The invention relates to an inner sole for sports footwear as specified in appended independent claim 1. Preferred embodiments of the invention are disclosed in the dependent claims.

The inner sole according to the invention comprises a base body having a first face (intended to be oriented, in use, towards the sole of the sports footwear), which has a plurality of projections defining corresponding recessed portions, and a second face (intended to be oriented, in use, towards the user's foot), which is substantially smooth and uniform.

The inner sole according to the invention further comprises a spacer which can be selectively arranged in a first position, in which it is coupled with the first face of said base body, or in a second position, in which it is coupled with the second face of said base body, said spacer being configured in such a way that - when it is coupled with said first face of said base body - it is received in one or more of said recessed portions and does not protrude beyond said projections.

It will therefore be evident to the person skilled in the art that when the spacer is coupled with the first face of the base body it does not contribute to the shape of the inner sole nor to its overall thickness (which therefore coincides with the thickness of the base body); instead, when the spacer is coupled with the second face of the base body, it locally contributes to the shape of the inner sole and to its overall thickness (which - in correspondence of said spacer - is given by the sum of the thickness of the base body and the thickness of the spacer).

It will also be evident that, when the spacer is coupled with the first face of the base body, it does not interact with the sole of the sports footwear and its shape does not have to take into account the geometry of the inner surface of said sole; instead, when the spacer is coupled with the second face of the base body, it is oriented towards the sole of the user's foot and it can therefore be effectively used for customizing the sports footwear to the specific morphology of said user's foot.

Advantageously, according to the invention, the base body and the spacer are permanently joined by a connecting element.

Said connecting element is flexible and it can therefore be rotated about an axis that is substantially parallel to the plane on which the base body of the inner sole lies, for bringing the spacer from one configuration to the other one.

According to a preferred embodiment of the invention, the base body, the spacer and the connecting element are made of the same material.

According to this preferred embodiment of the invention, the base body, the spacer and the connecting element are preferably made as a single piece.

This makes the manufacturing of the inner sole according to the invention particularly simple and cost-effective, which inner sole can be, for example, made by moulding by using a single mould or by cutting starting from a single sheet of material or with other techniques known to the person skilled in the art, including 3D printing.

The spacer can be shaped and sized so as to either entirely or only partially cover the faces of the base body of the inner sole.

In a preferred embodiment of the invention, said spacer is sized and shaped so as to cover the faces of the base body only in the region of the heel. However, this embodiment is not to be considered as limiting and other shapes of the spacer are also possible. For example, said spacer could be sized and shaped so as to cover the faces of the base body only in the region of the tip of the foot.

In a preferred embodiment of the invention, retaining elements are provided for firmly holding the spacer in place on one or both faces of the base body.

In a preferred embodiment of the invention, the inner sole according to the invention comprises a single spacer.

However, in alternative embodiments of the invention it is possible to provide for the presence of several spacers, each joined to the base body by means of a respective connecting element. The presence of a plurality of spacers allows the inner sole to assume a plurality of different configurations, thus increasing the possibility of customizing the sports footwear to the morphology of the foot of the specific user.

The inner sole according to the invention can be made of any suitable material, in particular of any suitable plastic material. In the case of applications to sports footwear intended for winter sports, it is preferable to select a material having good thermal insulation properties.

### Brief Description of the Drawings

A preferred embodiment of the invention, given by way of non-limiting example, will be described below with reference to the attached drawings, in which:
Figure 1 shows an inner sole for a sports footwear according to a preferred embodiment of the invention;
Figures 2a and 2b show the inner sole of Figure 1 in two different working configurations.

### Description of a Preferred Embodiment of the Invention

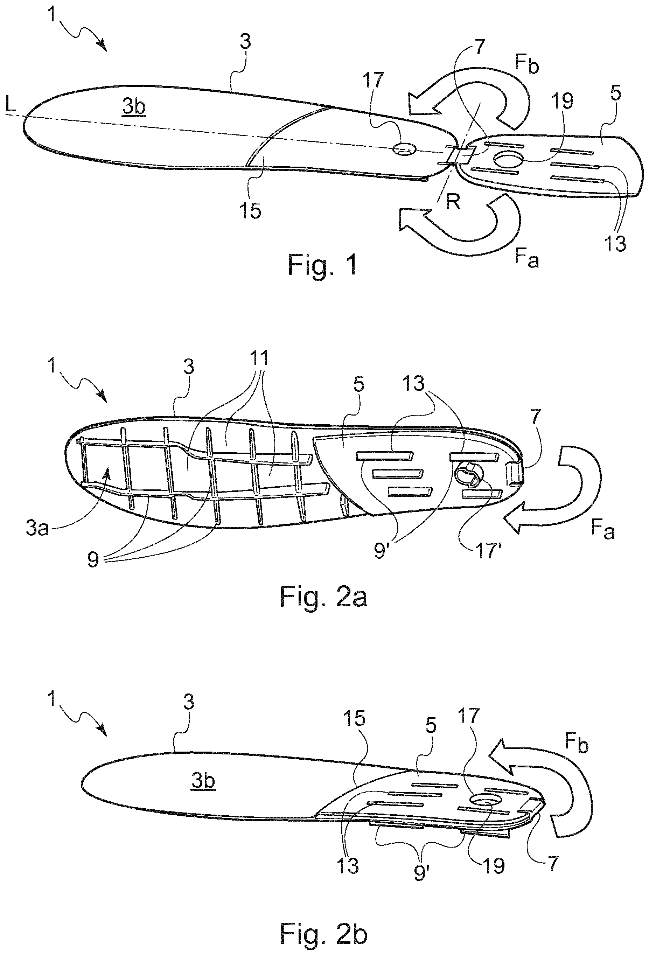

With particular reference initially to Figure 1, an inner sole for sports footwear according to the invention is shown, said inner sole being indicated as a whole with reference numeral 1.

In a manner known per se, the inner sole 1 comprises a base body 3 sized and shaped so as to be inserted inside a sports footwear, superimposed to the sole of said sports footwear, and to accommodate the sole of a user's foot or a portion thereof.

In a manner known per se, said base body 3 comprises a first face or lower face 3a (visible in Figure 2a), which in use is intended to be oriented towards the inner surface of the sole of the sports footwear and comprises a plurality of projections 9, defining corresponding recessed portions 11; more particularly, in the shown embodiment, said first face or lower face 3a comprises a plurality of protruding ribs 9 defining corresponding recessed portions 11. The second face or upper face 3b of the base body 3, which in use is intended to be oriented towards the user's foot, instead, has a substantially smooth and uniform surface.

According to the invention, the inner sole 1 further comprises at least one spacer 5 which is sized and shaped substantially like the base body 3 or a portion thereof, so that it can be coupled with the faces 3a, 3b of said base body or to a portion thereof.

In the shown embodiment, said spacer 5 is sized and shaped substantially like the heel portion of the base body 3, so that it can be coupled with either face of said base body at the heel portion thereof, as will be described in detail below.

The spacer 5 is joined to the base body 3 by means of a connecting element 7 and it is arranged so as to be specular to said base body 3 or a portion thereof with respect to a plane passing through the connecting element 7 and perpendicular to the longitudinal axis L of the base body 3.

In Figure 1, the connecting element 7 is arranged at the rear end of the base body 3, but it would also be possible to provide that the connecting element 7 is joined to one side of said base body 3.

Advantageously, the base body 3, the spacer 5 and the connecting element 7 can be made of a same material and, more particularly, they can be advantageously made as a single piece.

In this case, the method for manufacturing the inner sole according to the invention is particularly quick, simple and cost-effective, since the inner sole 1 can be made in a single step.

For example, if the inner sole 1 is made by injection moulding, it will be possible to provide a single mould, the inner cavity of which reproduces the shape of the base body 3, the spacer 5 and the connecting element 7.

Alternatively, in the case in which the inner sole 1 is made by cutting and subsequent machining, the base body 3, the spacer 5 and the connecting element 7 can be cut from a single sheet of material and then subjected to the necessary further machining.

Moreover, in the case in which the inner sole 1 is made by 3D printing, the base body 3, the spacer 5 and the connecting element 7 can be simultaneously made in a single step.

According to the invention, starting from the configuration shown in Figure 1, the connecting element 7 can be rotated by 180° about an axis R that is parallel to the plane on which the base body 3 of the inner sole 1 lies in a first direction for bringing the spacer 5 to be coupled with the first face 3a of the base body 3 (arrow Fa), or in a second, opposite direction for bringing said spacer 5 to be coupled with the second face 3b of said base body 3 (arrow Fb).

Figure 2a illustrates a first configuration of the inner sole 1 according to the invention, in which the connecting element 7 has been rotated so as to bring the spacer 5 to be coupled with the first face 3a of the base body 3 (arrow Fa).

According to the invention, the spacer 5 is shaped so as to be received inside one or more recessed portions 11 of said first face 3a of said base body 3, so that it does not protrude beyond the projections 9 of said first face of said base body.

In the embodiment shown in the Figures, for this purpose the spacer 5 comprises a plurality of slits 13 which are arranged and sized in such a way that protruding ribs 9' of the first face 3a of the base body 3 penetrate through said slits 13 when the spacer 5 is coupled with said first face 3a of said base body 3. In this way, said spacer 5 is inserted into the corresponding recessed portions defined between the ribs 9' and it does not protrude from said ribs.

By appropriately dimensioning the width of the slits 13 with respect to the width of the ribs 9', it is possible to obtain a press-fitting between said ribs and said slits. In this way, the ribs 9' advantageously act as retaining elements for the spacer 5, thus firmly keeping it in the correct position.

It will be evident to the person skilled in the art that in the configuration of Figure 2a the spacer 5 does not contribute in any way to the shape and thickness of the inner sole 1, so that the overall thickness of said inner sole 1 coincides with the thickness of the base body 3.

Figure 2b shows the inner sole 1 according to the invention in a second configuration, in which the connecting element 7 has been rotated so as to bring the spacer 5 to be coupled with the second face 3b of the base body 3 (arrow Fb).

According to the invention, in this configuration the spacer 5 is superimposed to the substantially smooth and uniform surface of the second face 3b of the base body 3.

Therefore, it will be evident to the person skilled in the art that in the configuration of Figure 2b the spacer 5 contributes - at least locally - to the shape and to the overall thickness of the inner sole 1, which - in the region in which said spacer is present - is substantially equal to the sum of the thickness of the base body 3 and the thickness of the spacer 5 itself.

In order to keep the spacer 5 in the correct position in this second configuration, it is possible to provide a slightly raised edge 15 on the surface of the second face 3b of the base body 3, which edge defines a seat for said spacer.

However, said edge 15 cannot be excessively protruding, since it could be uncomfortable for the user's foot.

Accordingly, in order to firmly keep the spacer 5 in the correct position in said second configuration, it is preferable that the base body 3 comprises a through-hole 17 and that the spacer 5, in turn, comprises a through-hole 19.

The through-holes 17 and 19 of the base body 3 and of the spacer 5 advantageously facilitate the correct alignment of said spacer relative to said base body. Moreover, a fastening pin (not shown) can be passed through said through-holes, which pin allows to hold the spacer 5 in the correct position.

With reference to Figure 2a, it should be noted that, in case said through-holes are provided, on the side of the first face 3a of the base body 3, the through-hole 17 preferably has a protruding edge 17' which penetrates into the through-hole 19 of the spacer 5, further contributing to hold said spacer in the correct position.

From the above disclosure, it is evident that the inner sole according to the invention allows to fully achieve the above-stated objects.

It is also evident that the embodiment described above has been given by way of non-limiting example and that several modifications and variants within the reach of the person skilled in the art are possible, without thereby departing from the scope of protection defined by the appended claims.

By way of example, although in the described embodiment reference has been made to a spacer adapted to be coupled with the faces of the base body at the heel portion, it is also possible to provide a differently positioned and/or shaped spacer.

Moreover, although in the described embodiment reference has been made to a single spacer, it is also possible to provide for the presence of several spacers, for example a plurality of spacers arranged at different portions of the base body.

## Claims

1. Inner sole (1) for sports footwear, comprising a base body (3), which is sized and shaped so as to be insertable into said sports footwear and to receive the sole of the foot of a user or a portion thereof, wherein said base body has a first face (3a), which is provided with a plurality of projections (9) defining corresponding recessed portions (11), and a second face (3b), which has a substantially uniform and smooth surface, wherein said inner sole comprises at least one spacer (5) which has substantially the same size and shape as said base body (3) or as a part thereof, wherein said spacer is selectively switchable between a first position, in which it is coupled with said first face of said base body (3), and a second position, in which it is coupled with said second face of said base body (3), and wherein said spacer (5) is shaped so that it is received within one or more of said recessed portions (11) when it is coupled with said first face of said base body, so that, when said spacer (5) is in said first position, the overall thickness of said inner sole (1) coincides with the thickness of said base body (3), whereas, when said spacer is in said second position, the overall thickness of said inner sole (1), in the region in which said spacer is present, is substantially equal to the sum of the thickness of said base body (3) and the thickness of said spacer (5), and in that said spacer (5) is joined to said base body (3) by means of a connecting element (7).

2. Inner sole (1) according to claim 1, wherein said base body (3), said spacer (5) and said connecting element (7) are made of a same material.

3. Inner sole (1) according to claim 1 or 2, wherein said base body (3), said spacer (5) and said connecting element (7) are made as a single piece.

4. Inner sole (1) according to any of the claims 1 - 3, wherein said connecting element (7) is pivotable about an axis (R) which is parallel to the plane on which said base body (3) of the inner sole lies for bringing said spacer (5) from said first to said second position, and vice versa.

5. Inner sole (1) according to claim 1, wherein said inner sole comprises retaining elements for holding said spacer in position when it is coupled with said first face and/or to said second face of said base body.

6. Inner sole (1) according to claim 1, wherein said spacer (5) is provided with slits (13), which are arranged and sized so as to be passed through by corresponding projections (9') of said first face of said base body when said spacer is coupled with said first face of said base body.

## Patentansprüche

1. Einlegesohle (1) für Sportschuhe, mit einem Grundkörper (3), der so bemessen und geformt ist, dass er in den Sportschuh einlegbar ist und die Fußsohle eines Benutzers oder einen Abschnitt derselben aufnehmen kann, wobei der Grundkörper eine erste Seite (3a), die mit mehreren Vorsprüngen versehen ist, die entsprechende Aussparungen (11) definieren, und eine zweite Seite (3b), die eine im Wesentlichen gleichförmige und glatte Oberfläche hat, aufweist, wobei die Innensohle wenigstens einen Abstandhalter (5) aufweist, der im Wesentlichen die selbe Größe und Form wie der Grundkörper oder ein Teil desselben hat, wobei der Abstandhalter selektiv zwischen einer ersten Position, in der mit der ersten Seite des Grundkörpers (3) gekoppelt ist, und einer zweiten Position, in der er mit der zweiten Seite des Grundkörpers (3) gekoppelt ist, wechseln kann, wobei der Abstandhalter (5) so geformt ist ,dass er in eine oder mehrere der Aussparungen (11) eingreift, wenn er mit der ersten Seite des Grundkörpers gekoppelt ist, so dass, wenn der Grundkörper in der ersten Position ist, die Gesamtdicke der Einlegesohle (1) mit der Dicke des Grundkörpers (3) übereinstimmt, wohingegen, wenn der Abstandhalter in der zweiten Position ist, die Gesamtdicke der Einlegesohle (1) in dem Bereich, in dem der Abstandhalter liegt, im Wesentlichen der Summe der Dicke des Grundkörpers (3) und der Dicke des Abstandhalters (5) entspricht, wobei der Abstandhalter (5) über ein Verbindungselement (7) mit dem Grundkörper (3) verbunden ist.

2. Einlegesohle (1) nach Anspruch 1, wobei der Grundkörper (3), der Abstandhalter (5) und das Verbindungselement (7) aus demselben Material sind.

3. Einlegesohle (1) nach Anspruch 1 oder 2, wobei der Grundkörper (3), der Abstandhalter (5) und das Verbindungselement (7) einstückig hergestellt sind.

4. Einlegesohle (1) nach einem der Ansprüche 1 bis 3, wobei das Verbindungselement (7) um eine Achse (R) schwenkbar ist, die parallel zu der Ebene verläuft, in welcher der Grundkörper (3) der Einlegesohle liegt, um den Abstandhalter (5) aus der ersten Position in die zweite Position zu bringen und umgekehrt.

5. Einlegesohle (1) nach Anspruch 1, wobei die Einlegesohle Halteelemente aufweist, um den Abstandhalter in Position zu halten, wenn er an die erste Seite und/oder an die zweite Seite des Grundkörpers gekoppelt ist.

6. Einlegesohle (1) nach Anspruch 1, wobei der Abstandhalter (5) mit Schlitzen (13) versehen ist, die so angeordnet und bemessen sind, dass entsprechende Vorsprünge (9') der ersten Seite des Grundkörpers hindurchragen können, wenn der Abstandhalter mit der ersten Seite des Grundkörpers gekoppelt ist.

## Revendications

1. Semelle intérieure (1) pour chaussure de sport, comprenant un corps de base (3), qui est dimensionné et façonné de façon à pouvoir être inséré à l'intérieur de ladite chaussure de sport et à recevoir la plante du pied d'un utilisateur ou une partie de celle-ci, dans laquelle ledit corps de base présente une première face (3a), qui est munie d'une pluralité de protubérances (9) définissant des parties en creux correspondantes (11), et une deuxième face (3b), qui présente une surface essentiellement uniforme et lisse, dans laquelle ladite semelle intérieure comprend au moins une cale (5) qui a essentiellement les mêmes dimensions et la même forme que ledit corps de base (3) ou qu'une partie de celui-ci, dans laquelle ladite cale peut être sélectivement basculée entre une première position, dans laquelle elle est couplée à ladite première face dudit corps de base (3), et une deuxième position, dans laquelle elle est couplée à ladite deuxième face dudit corps de base (3), et dans laquelle
ladite cale (5) est façonnée de façon à être reçue à l'intérieur d'une ou plusieurs desdites parties en creux (11) lorsqu'elle est couplée à ladite première face dudit corps de base, de sorte que, lorsque ladite cale (5) se trouve dans ladite première position, l'épaisseur totale de ladite semelle intérieure (1) coïncide avec l'épaisseur dudit corps de base (3), alors que lorsque ladite cale se trouve dans ladite deuxième position, l'épaisseur totale de ladite semelle intérieure (1), dans la région dans laquelle ladite cale est présente, est essentiellement égale à la somme de l'épaisseur dudit corps de base (3) et de l'épaisseur de ladite cale (5), et en ce que ladite cale (5) est attachée audit corps de base (3) au moyen d'un élément de raccordement (7).

2. Semelle intérieure (1) selon la revendication 1, dans laquelle ledit corps de base (3), ladite cale (5) et ledit élément de raccordement (7) sont faits d'un même matériau.

3. Semelle intérieure (1) selon la revendication 1 ou 2, dans laquelle ledit corps de base (3), ladite cale (5) et ledit élément de raccordement (7) sont faits d'un seul tenant.

4. Semelle intérieure (1) selon l'une quelconque des revendications 1 à 3, dans laquelle ledit élément de raccordement (7) peut pivoter autour d'un axe (R) qui est parallèle au plan sur lequel repose ledit corps de base (3) de la semelle intérieure pour amener ladite cale (5) de ladite première à ladite deuxième positions, et inversement.

5. Semelle intérieure (1) selon la revendication 1, dans laquelle ladite semelle intérieure comprend des éléments de retenue pour maintenir ladite cale en position lorsqu'elle est couplée à ladite première face et/ou à ladite deuxième face dudit corps de base.

6. Semelle intérieure (1) selon la revendication 1, dans laquelle ladite cale (5) est munie de fentes (13), qui sont disposées et dimensionnées de façon à être traversées par des protubérances correspondantes (9') de ladite première face dudit corps de base lorsque ladite cale est couplée à ladite première face dudit corps de base.
